# EUROPEAN PATENT SPECIFICATION

(11) **EP 4 245 817 B1**
(45) Date of publication and mention of the grant of the patent: **04.09.2024**
(21) Application number: 23152428.1
(22) Date of filing: 19.01.2023
(51) Int. Cl.: C09D 11/101, C09D 11/34, C09D 11/322, C09D 11/38

(54) **INKJET INK COMPOSITION, RECORDED MATTER, INKJET RECORDING METHOD, AND INKJET RECORDING SYSTEM**
TINTENSTRAHLTINTENZUSAMMENSETZUNG, AUFGEZEICHNETES MATERIAL, TINTENSTRAHLAUFZEICHNUNGSVERFAHREN UND TINTENSTRAHLAUFZEICHNUNGSSYSTEM
COMPOSITION D'ENCRE POUR JET D'ENCRE, MATIÈRE ENREGISTRÉE, PROCÉDÉ D'IMPRESSION PAR JET D'ENCRE ET SYSTÈME D'IMPRESSION PAR JET D'ENCRE

(30) Priority: 17.03.2022 JP 2022042523
(43) Date of publication of application: 20.09.2023
(73) Proprietor: Konica Minolta, Inc., Tokyo 100-7015 (JP)
(72) Inventor: AOYAMA, Ryo, Tokyo, 100-7015 (JP); MIYANO, Masashi, Tokyo, 100-7015 (JP); KAWANAMI, Tomoe, Tokyo, 100-7015 (JP); TANI, Kunio, Tokyo, 100-7015 (JP); HORIE, Yutaro, Tokyo, 100-7015 (JP); KATSUDA, Ai, Tokyo, 100-7015 (JP)
(74) Representative: Hoffmann Eitle

(56) References cited:
- EP-A1- 2 789 470
- EP-A1- 3 357 983
- EP-A1- 3 587 512
- EP-A1- 3 617 283

## Description

### TECHNICAL FIELD

The present invention relates to an inkjet ink composition, a recorded matter, an inkjet recording method, and an inkjet recording system, and particularly relates to an inkjet ink composition capable of achieving both sufficient hardness and adhesiveness as a recorded matter, suppressing an increase in viscosity during long-term storage or retention, and suppressing a change in particle diameter and generation of a precipitate.

### DESCRIPTION OF THE RELATED ART

For the purpose of protecting a circuit pattern, an insulating film (solder resist film) is formed on a printed wiring board in a printed circuit board by applying and curing an ink. As a method for forming a solder resist film, for example, an inkjet method is known, and specifically, an inkjet ink (hereinafter, also simply referred to as an "ink") is applied, cured by light, and then cured by heat.

Patent Document 1 (JP-A 2020-37645) discloses a resist inkjet ink containing a photopolymerizable compound having an acidic group. As a photopolymerizable compound having an acidic group, a carboxy group, a phosphoric acid group, and a sulfonic acid group are used. However, when a photopolymerizable compound having a phosphoric acid group or a sulfonic acid group is used, the viscosity and particle size of the ink tend to increase due to pigment aggregation. In particular, there was a problem that fluctuations in ejection amount and clogging of an inkjet head filter tend to occur when the ink remained at high temperature in an ink pack or an inkjet head. In addition, when using a photopolymerizable compound with a carboxy group, the increase in viscosity and particle size is less likely to occur than with a phosphoric acid group or a sulfonic acid group, but there was a problem that it is difficult to obtain sufficient hardness and adhesiveness as a resist film.

Patent Document 2 (JP-A 2018-178468) discloses a technique relating to an adhesive composition characterized by containing an acrylic resin, an ionic compound and a polymer-type carbodiimide. However, since the carbodiimide compound has a mechanism of suppressing hydrolysis by reacting with carboxylic acid, there was a problem that the viscosity of the ink tends to increase when it is applied to the inkjet ink.

### SUMMARY OF THE INVENTION

The present invention was made in view of the above problems and circumstances, and the problem to be solved is to provide an inkjet ink composition, a recorded matter, an inkjet recording method and an inkjet recording system capable of achieving both sufficient hardness and adhesiveness as a recorded matter, suppressing increase in viscosity during long-term storage and retention, and suppressing fluctuation in particle size and generation of a precipitate.

In order to solve the above-described problems, in the process of studying the causes of the above-described problems, the present inventors have found that when a compound having a specific structure is used among photopolymerizable compounds having a carboxy group, pigment aggregation hardly occurs, and sufficient hardness and adhesiveness as a recorded matter (for example, a resist film) can be obtained. However, when the compound having the specific structure is used, there is a problem in that a hydrolysate is precipitated in a high-temperature and high-humidity environment, and clogging of an inkjet head filter occurs. Accordingly, the present inventors have found that by containing a compound having a specific structure and a hyperbranched acrylate oligomer or polymer, it is possible to achieve both sufficient hardness and adhesiveness as a recorded matter, to suppress an increase in viscosity during long-term storage or retention, to suppress a change in particle diameter, and to suppress hydrolysis even under a high-temperature and high-humidity environment to suppress the generation of a precipitate, and thus have reached the present invention. That is, the above problem according to the present invention is solved by the following means.
1. An inkjet ink composition that is curable with an active energy ray or heat, containing: a compound having a structure represented by Formula (1) or salt thereof (A); and a hyperbranched acrylate oligomer or polymer (B), 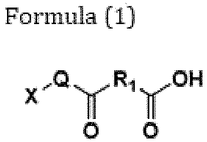 in Formula (1), X represents a substituent having at an end thereof at least one selected from an acryloyl group, a methacryloyl group, an allyl group, a vinyl group and derivatives thereof, Q represents an oxygen atom or NR₄, and R₄ represents a hydrogen atom, a substituted or unsubstituted alkyl group, or a substituted or unsubstituted aryl group, and R₁ represents an unsubstituted alkylene group having 1 to 6 carbon atoms.
2. The inkjet ink composition according to item 1, wherein in Formula (1), X represents an acryloyl group or a methacryloyl group.
3. The inkjet ink composition according to item 1 or 2, wherein in Formula (1), Q represents an oxygen atom.
4. The inkjet ink composition according to any one of items 1 to 3, wherein in Formula (1), R₁ represents an unsubstituted alkylene group having 1 or 2 carbon atoms.
5. The inkjet ink composition according to any one of items 1 to 4, further containing a polyfunctional (meth)acrylate (C) having three or more (meth)acryloyl groups other than the hyperbranched acrylate oligomer or polymer (B).
6. The inkjet ink composition according to item 5, wherein the polyfunctional (meth)acrylate (C) having three or more (meth)acryloyl groups other than the hyperbranched acrylate oligomer or polymer (B) is a caprolactam modified dipentaacrylate.
7. The inkjet ink composition according to any one of items 1 to 6, further containing a (meth)acrylate compound (D) having a ClogP value in the range of 4.0 to 7.0.
8. The inkjet ink composition according to any one of items 1 to 7, further containing a gelling agent (E).
9. The inkjet ink composition according to any one of items 1 to 8, wherein the inkjet ink composition is used as an inkjet ink for forming a solder resist pattern used for a printed circuit board.
10. A recorded matter obtained by curing the inkjet ink composition according to any one of items 1 to 9 with an active energy ray or heat.
11. An inkjet recording method using the inkjet ink composition according to any one of items 1 to 9, comprising the steps of:
   discharging the inkjet ink composition from an inkjet head to land the inkjet ink composition on a recording medium; and
   curing the inkjet ink composition landed on the recording medium by an active energy ray or heat.
12. An inkjet recording system using the inkjet ink composition according to any one of items 1 to 9, provided with: an inkjet head that discharges the inkjet ink composition; an active energy ray irradiation unit that irradiates the inkjet ink composition that has landed on a recording medium; and a heating unit that heats the inkjet ink composition that has been irradiated with the active energy ray.

According to the above-described means of the present invention, it is possible to provide an inkjet ink composition, a recorded matter, an inkjet recording method, and an inkjet recording system capable of achieving both sufficient hardness and adhesiveness as a recorded matter, suppressing an increase in viscosity during long-term storage or retention, and suppressing a change in particle diameter and the generation of a precipitate. An expression mechanism or an action mechanism of the effect of the present invention is not clear, but is assumed as follows.

In general, when a compound having an ester bond (or an amide bond) is heated in the presence of water and an acid, the compound is hydrolyzed to produce an alcohol (or an amine) and a carboxylic acid. This reaction is an equilibrium reaction. The compound having a structure represented by Formula (1) or a salt thereof (A) in the present invention has a dicarboxylic acid structure, and is coordinated to a metal substrate to adhere to the metal substrate more strongly than a general carboxylic acid acrylate. On the other hand, the solubility of a dicarboxylic acid generated by hydrolysis in a monomer is low, and the dicarboxylic acid is easily precipitated. On the other hand, the hyperbranched acrylate oligomer or polymer (B) also has an acrylate structure, and it is considered that there is a possibility that an unreacted hydroxy group remains in the molecule, or a hydroxy group is generated by hydrolysis. In addition, since the hyperbranched acrylate oligomer or polymer (B) has a branched structure, it is considered that a plurality of hydroxy groups may be included in one molecule. Therefore, we speculate that the hydroxy group concentration in the ink is increased by combining the above compound or a salt thereof (A) with hyperbranched acrylate oligomer or polymer (B), and the hydrolysis reaction equilibrium of the above compound or salt (A) is shifted to the ester side, thereby inhibiting hydrolysis. The hydrolysis of the compound or a salt thereof (A) may be suppressed by increasing the concentration of hydroxy groups in the ink and biasing the equilibrium of the hydrolysis reaction of the compound or salt (A) toward the ester side. In addition, since the hyperbranched acrylate oligomer or polymer (B) has a branched structure, it may contain a plurality of hydroxy groups in one molecule. We speculate that hydrolysis may be inhibited more efficiently than when hydroxy group-containing compounds other than hyperbranched acrylate oligomer or polymer (B) are used in combination.

### DETAILED DESCRIPTION

Hereinafter, one or more embodiments of the present invention will be described. However, the scope of the present invention is not limited to the disclosed embodiments.

The inkjet ink composition of the present invention is an inkjet ink composition that is cured by an active energy ray or heat, and contains a compound having a structure represented by the following Formula (1) or a salt thereof (A), and a hyperbranched acrylate oligomer or polymer (B).

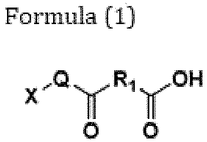

In Formula (1), X represents a substituent having at an end thereof at least one selected from an acryloyl group, a methacryloyl group, an allyl group, a vinyl group and derivatives thereof. Q represents an oxygen atom or NR₄, and R₄ represents a hydrogen atom, a substituted or unsubstituted alkyl group, or a substituted or unsubstituted aryl group. R₁ represents an unsubstituted alkylene group having 1 to 6 carbon atoms. This feature is a technical feature common to or corresponding to each of the following embodiments.

In an embodiment of the present invention, X in Formula (1) preferably represents an acryloyl group or a methacryloyl group from the viewpoint of improving the reactivity of the compound having a structure represented by Formula (1) or a salt thereof (A) and improving the adhesiveness. The total number of carbon atoms of the substituent represented by X is preferably 50 or less, and more preferably 30 or less from the viewpoint of reducing the viscosity of the ink and improving the inkjet suitability. Further, in Formula (1), Q preferably represents an oxygen atom from the viewpoint of improving the adhesiveness. Further, in Formula (1), R₁ preferably represents an unsubstituted alkylene group having 1 or 2 carbon atoms from the viewpoint of improving adhesiveness.

It is preferable to further contain a polyfunctional (meth)acrylate (C) having three or more (meth)acryloyl groups other than the hyperbranched acrylate oligomer or polymer (B) from the viewpoint that the coating film hardness may be increased. It is preferable to further contain a polyfunctional (meth)acrylate (C) having three or more (meth) acryloyl groups other than the hyperbranched acrylate oligomer or polymer (B) from the viewpoint that the hydrolysis of the compound having a structure represented by Formula (1) or a salt thereof (A) is suppressed and the acid resistance and the alkali resistance are improved.

It is preferable to further contain a (meth)acrylate compound (D) having a ClogP value in the range of 4.0 to 7.0 from the viewpoint of reducing the water absorption rate of the ink and suppressing the hydrolysis of the compound having a structure represented by Formula (1) or a salt thereof (A).

It is preferable to further contain the gelling agent (E) from the viewpoint that the ink on the recording medium may be temporarily fixed in a gelled state and the wet-spreading of the ink may be suppressed. In addition, the hydrolysis of the compound having a structure represented by Formula (1) or a salt thereof (A) may be suppressed by decreasing the water absorbency of the ink.

The inkjet ink composition of the present invention is suitably used for an inkjet ink for forming a solder resist pattern used for a printed circuit board, and is also suitably used for a recorded matter obtained by curing the inkjet ink composition of the present invention with an active energy ray or heat.

The inkjet recording method of the present invention is an inkjet recording method using an inkjet ink composition, the inkjet recording method including the steps of: discharging the inkjet ink composition from an inkjet head to land the inkjet ink composition on a recording medium; and curing the inkjet ink composition landed on the recording medium by an active energy ray or heat. By this method, it is possible to obtain a recorded matter having excellent hardness and adhesiveness, to suppress an increase in viscosity during long-term storage or retention, and to suppress a change in particle diameter and the generation of a precipitate.

The inkjet recording system of the present invention is an inkjet recording system using an inkjet ink composition, which uses the inkjet ink composition and includes an inkjet head for discharging the inkjet ink composition, an active energy ray irradiation unit for irradiating the inkjet ink composition landed on a recording medium with an active energy ray, and a heating unit for heating the inkjet ink composition irradiated with the active energy ray. By this, it is possible to obtain a recorded matter having excellent hardness and adhesiveness, to suppress an increase in viscosity during long-term storage or retention, and to suppress a change in particle diameter and the generation of a precipitate.

Hereinafter, the present invention, constituent elements thereof, and forms and embodiments for carrying out the present invention will be described. In the present application, "to" is used to mean that numerical values described before and after "to" are included as a lower limit value and an upper limit value.

### [Inkjet ink composition of the present invention]

The inkjet ink composition of the present invention is an inkjet ink composition which is cured by an active energy ray or heat, and contains a compound having a structure represented by Formula (1) or a salt thereof (A), and a hyperbranched acrylate oligomer or polymer (B).

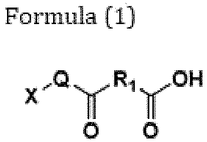

In Formula (1), X represents a substituent having at an end thereof at least one selected from an acryloyl group, a methacryloyl group, an allyl group, a vinyl group and derivatives thereof. Q represents an oxygen atom or NR₄, and R₄ represents a hydrogen atom, a substituted or unsubstituted alkyl group, or a substituted or unsubstituted aryl group. R₁ represents an unsubstituted alkylene group having 1 to 6 carbon atoms.

The inkjet ink composition of the present invention functions as an insulating film (solder resist) by being cured by light or heat after being applied to a substrate in various fields such as metal processing, an electronic circuit, a printed circuit board, plate making, a semiconductor field, and a color filter. Moreover, since it may be removed with an alkali after photocuring, it also functions as an etching resist used for forming an etching pattern on a substrate. Specifically, a conductive oxide film of copper or zinc formed on a substrate is patterned with the inkjet ink composition of the present invention by inkjet printing and cured with light to form a resist film, and then the oxide film in a portion not covered with the resist film is removed with an acidic etching solution, and the resist film covering the oxide film is further removed with an alkali, whereby a fine circuit or pattern may be formed. In addition to the above applications, the composition may be preferably used for the purpose of patterning a film having both adhesiveness and hardness on a substrate having an inorganic surface, such as a metal or glass substrate.

The inkjet ink composition of the present invention is an ink composition that may be cured by an active ray. The "active ray" is a radiation that can impart energy for generating an initiating species in an ink composition by irradiation thereof, and includes an α-ray, a γ-ray, an X-ray, a ultraviolet ray, and an electron beam. Among these, from the viewpoint of curing sensitivity and availability of an apparatus, ultraviolet rays and electron beams are preferable, and ultraviolet rays are more preferable.

### [1. Compound having a structure represented by Formula (1) or salt thereof (A)]

The inkjet ink composition (hereinafter, also simply referred to as an "ink") according to the present invention includes a compound having a structure represented by Formula (1) or a salt thereof (A), and thus it is possible to achieve both hardness and adhesiveness as a recorded matter, and may suppress variations in viscosity and particle diameter during long-term storage and retention.

In Formula (1), X preferably represents an acryloyl group or a methacryloyl group from the viewpoint of improving the reactivity of the compound having a structure represented by Formula (1) or a salt thereof (A) and improving the adhesiveness. The total number of carbon atoms of the substituent represented by X is preferably 50 or less, and more preferably 30 or less from the viewpoint of reducing the viscosity of the ink and improving the inkjet suitability. In Formula (1), Q preferably represents an oxygen atom from the viewpoint of improving the adhesiveness. In Formula (1), R₁ preferably represents an unsubstituted alkylene group having 1 or 2 carbon atoms from the viewpoint of improving adhesiveness. In addition, the compound having a structure represented by Formula (1) is preferably not a salt from the viewpoint of increasing compatibility with other monomers and hydrophobicity of the ink and suppressing hydrolysis of the compound having a structure represented by Formula (1) or a salt thereof (A).

Specific examples of the compound having a structure represented by Formula (1) or a salt thereof are shown below, but the present invention is not limited thereto.

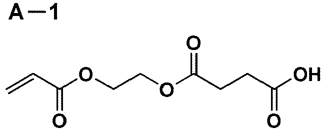

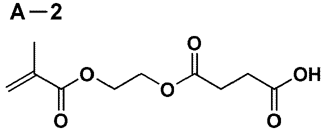

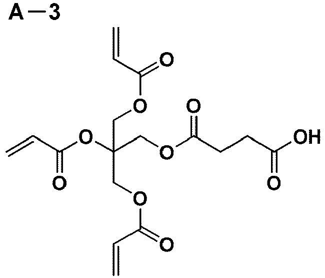

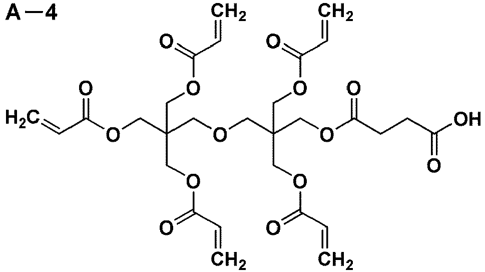

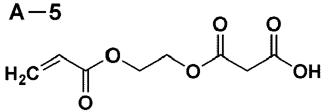

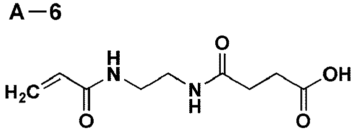

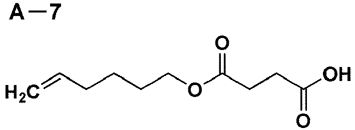

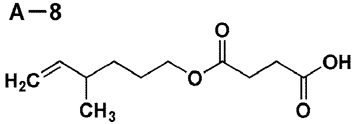

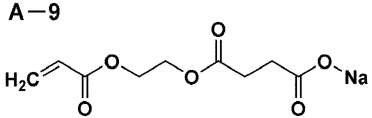

The content of the compound having a structure represented by Formula (1) or a salt thereof (A) is preferably in the range of 1 to 50% by mass, and more preferably in the range of 3 to 20% by mass with respect to the total amount of the ink, because a larger content contributes to hardness and adhesiveness, but an excessively large content promotes hydrolysis of the compound or a salt thereof as an acid catalyst.

### [2. Hyperbranched acrylate oligomer or polymer (B)]

Since the ink of the present invention contains the hyperbranched acrylate oligomer or polymer (B), the hydrolysis of the compound having a structure represented by Formula (1) or a salt thereof (A) may be suppressed, and the precipitation may be suppressed.

The hyperbranched acrylate oligomer according to the present invention is an acrylate oligomer having a hyperbranched structure.

In the present invention, the "oligomer" refers to a compound in which the number of bonded monomers (degree of polymerization) is in the range of 2 to 10 and the weight average molecular weight is in the range of 500 to 15,000. In the present invention, the "polymer" refers to a compound in which the number of bonded monomers (degree of polymerization) is 11 or more and the weight average molecular weight is more than 10,000. The polymer according to the present invention is preferably, for example, a polymer of the above-described oligomer.

In addition, in the present invention, the "hyperbranched structure" refers to a dendritic compound having a large number of branch points in one molecule. For example, it is synthesized by self-condensation of AB₂-type molecules having a total of 3 or more of two types of substituents in one molecule, or synthesized by the A₂ + B₃ method, which is a condensation reaction between two molecules (A₂-type and B₃-type). Therefore, the hyperbranched structure in the present invention includes a dendrimer structure (dendritic structure), a star structure, and a graft structure.

Examples of commercially available hyperbranched acrylate oligomers include V#1000 (manufactured by Osaka Organic Chemical Industry Co.), CN2302, CN2303, CN2304, (manufactured by Sartomer Co., Ltd.), SP1106 (manufactured by Miwon Co., Ltd.), 6361-100, 6363 (manufactured by Eternal Material Co., Ltd.). These may be used alone or in combination of two or more.

The larger the content of the aforementioned hyperbranched acrylate oligomer or polymer (B), the more it contributes to inhibiting hydrolysis of the compound having the structure represented by Formula (1) or a salt thereof (A). However, too much of it increases the viscosity of the ink too much and makes it difficult to discharge the ink using an inkjet head. Therefore, it is preferable to use 5 to 50% by mass of the total ink, and 10 to 30% by mass is more preferable.

### [3. Polyfunctional (meth)acrylate (C) having three or more (meth)acryloyl groups that is not a hyperbranched acrylate oligomer or polymer]

The ink of the present invention preferably contains a polyfunctional (meth)acrylate (C) having three or more (meth)acryloyl groups, which is not a hyperbranched acrylate oligomer or polymer as described above. (Hereinafter, it is simply referred to as a "polyfunctional (meth)acrylate (C) having three or more (meth)acryloyl groups"). It may further increase the hardness of the coating film.

The above-mentioned polyfunctional (meth)acrylate (C) having three or more (meth)acryloyl groups generally has a large cure shrinkage and tends to impair adhesion to the substrate, but when used in combination with the compound having the structure represented by the above Formula (1) or a salt thereof (A), the hardness of the coating film may be greatly increased while maintaining the necessary adhesiveness. From the viewpoint of increasing the hardness of the coating film, it is preferable that the aforementioned polyfunctional (meth)acrylate (C) having three or more (meth)acryloyl groups have five or more (meth)acryloyl groups. It is more preferred to have six or more.

Only one type of the aforementioned polyfunctional (meth)acrylate (C) having three or more (meth)acryloyl groups may be used, or a plurality of types may be included in the ink of the present invention.

Examples of the (meth)acrylate having three (meth)acryloyl groups (also referred to as a "trifunctional (meth)acrylate") include trimethylolpropane tri(meth)acrylate, glycerin tri(meth)acrylate, glycerin propoxy tri(meth)acrylate, pentaerythritol tri(meth)acrylate, and tri(meth)acrylate in which three hydroxy groups of triol obtained by adding three or more moles of ethylene oxide or propylene oxide to one mole of trimethylolpropane are substituted with (meth)acryloyloxy groups.

Examples of the (meth)acrylate having four (meth)acryloyl groups (also referred to as a "tetrafunctional (meth)acrylate") include ditrimethylolpropane tetra(meth)acrylate, pentaerythritol ethoxy tetra(meth)acrylate, and pentaerythritol tetra(meth)acrylate. Examples of the (meth)acrylate having five (meth)acryloyl groups (also referred to as a "pentafunctional (meth)acrylate") include dipentaerythritol penta(meth)acrylate, and pentaerythritol penta(meth)acrylate. Examples of the (meth)acrylate having six (meth)acryloyl groups (also referred to as a "hexafunctional (meth)acrylate") include dipentaerythritol hexa(meth)acrylate, and pentaerythritol hexa(meth)acrylate.

The (meth)acrylate may be a modified product. Examples of the modified (meth)acrylate include ethylene oxide-modified (meth) acrylates such as ethylene oxide-modified trimethylolpropane tri(meth)acrylate and ethylene oxide-modified pentaerythritol tetra(meth)acrylate, propylene oxide-modified (meth)acrylates such as propylene oxide-modified trimethylolpropane tri(meth)acrylate and propylene oxide-modified pentaerythritol tetra(meth)acrylate, caprolactone-modified (meth)acrylates such as caprolactone-modified trimethylolpropane tri(meth)acrylate, and caprolactam-modified (meth)acrylates such as caprolactam-modified dipentaerythritol hexa(meth)acrylate. In particular, caprolactam-modified dipentaerythritol hexaacrylate is particularly preferable in that it can suppress hydrolysis of the compound having a structure represented by Formula (1) or a salt thereof (A) by reducing water absorbency of the ink, and may further improve acid resistance and alkali resistance.

Examples of commercially available products of the (meth)acrylate include M500 (5-functional acrylate, manufactured by Sartomer Co., Ltd.) and M600 (6-functional acrylate, manufactured by Sartomer Co., Ltd.). Examples of commercially available products of the caprolactam-modified dipentaerythritol hexaacrylate include DPCA20, DPCA30, DPCA60 and DPCA120 (6-functional acrylate, manufactured by Nippon Kayaku Co., Ltd.).

The content of the polyfunctional (meth)acrylate (C) having three or more (meth) acryloyl groups is preferably in the range of 5 to 50% by mass, and more preferably in the range of 10 to 30% by mass with respect to the entire ink.

### [4. (Meth)acrylate (D) having a ClogP value in the range of 4.0 to 7.0]

It is preferable that the ink of the present invention contains a (meth)acrylate (D) having a ClogP value in the range of 4.0 to 7.0 from the viewpoint of decreasing the water absorption rate of the ink and suppressing the hydrolysis of the compound having a structure represented by Formula (1) or a salt thereof (A).

Examples of the (meth)acrylate (D) having a ClogP value in the range of 4.0 to 7.0 include propoxylated (2) neopentylglycol diacrylate (molecular weight: 471, ClogP: 4.9), 1,10-decanediol dimethacrylate (molecular weight: 310, ClogP: 5.75), tricyclodecanedimethanol diacrylate (molecular weight: 304, ClogP: 4.69), and tricyclodecanedimethanol dimethacrylate (molecular weight: 332, ClogP: 5.12).

Examples of commercially available products of the (meth)acrylate (D) having a ClogP value in the range of 4.0 to 7.0 include SR834 (manufactured by Sartomer Co., Ltd.) (tricyclodecanedimethanol dimethacrylate), NK Ester DOD-N (manufactured by Shin-Nakamura Chemical Co., Ltd.) (1,10-decanediol dimethacrylate), NK Ester NOD-N (manufactured by Shin-Nakamura Chemical Co., Ltd.) (1,9-nonanediol dimethacrylate), NK Ester A-DOD-N (manufactured by Shin-Nakamura Chemical Co., Ltd.) (1,10-decanediol diacrylate), and NK Ester A-NOD-N (manufactured by Shin-Nakamura Chemical Co., Ltd.) (1,10-nonanediol diacrylate).

In addition, it is more preferable that the (meth)acrylate (D) having a ClogP value in the range of 4.0 to 7.0 is contained in the range of 10 to 40% by mass with respect to the entire ink from the viewpoint of suppressing hydrolysis of the compound having a structure represented by Formula (1) or a salt thereof (A).

As used herein, the term "logP value" refers to a coefficient indicating the affinity of an organic compound for water and 1-octanol. The 1-octanol/water partition coefficient P is a partition equilibrium when a trace amount of a compound is dissolved as a solute in a two liquid phase solvent of 1-octanol and water, and it is the ratio of the equilibrium concentration of the compound in each solvent, and is indicated by the logarithm logP thereof to the base 10. That is, the "logP value" is a logarithmic value of the partition coefficient of 1-octanol/water, and is known as an important parameter representing the hydrophilicity/hydrophobicity of a molecule.

A "ClogP value" is a logP value obtained by calculation. The ClogP value may be calculated by a fragment method or an atomic approach method. More specifically, in order to calculate the ClogP value, the fragment method described in the literature (C. Hansch and A. Leo, "Substituent Constants for Correlation Analysis in Chemistry and Biology" (John Wiley & Sons, New York, 1969)) or the following commercially available software package 1 or 2 may be used.

Software Package 1: MedChem Software (Release 3.54, August 1991; Medicinal Chemistry Project, Pomona College, Claremont, CA); and

Software Package 2: Chem Draw Ultra ver. 8.0 (April 2003, Cambridge Soft Corporation, USA)

The ClogP values given in the present specification are " ClogP values" calculated using the software package 2.

### [5. Polymerization initiator]

The ink of the present invention may be cured by radical polymerization or ionic polymerization, but in the present invention, a radical polymerization initiator is preferably used as the polymerization initiator. The ink of the present invention may contain only one type of polymerization initiator, or may contain two or more types of polymerization initiators.

Examples of the radical polymerization initiator include an α-cleavage type radical polymerization initiator (also referred to as "Norrish type I polymerization initiator") and a hydrogen abstraction type radical polymerization initiator (also referred to as "Norrish type II polymerization initiator").

The content of the α-cleavage type radical polymerization initiator is preferably in the range of 0.3 to 6% by mass relative to the total mass of the ink of the present invention, and the content of the hydrogen abstraction type radical polymerization initiator is preferably in the range of 0.5 to 10% by mass relative to the total mass of the ink of the present invention.

The α-cleavage type radical polymerization initiator is an initiator which is cleaved after photoexcitation to directly give an initiating radical. In addition, the hydrogen abstraction type radical polymerization initiator is a photopolymerization initiator which is activated by an active energy ray (for example, ultraviolet ray) to generate a free radical by hydrogen abstraction from a second compound, and the second compound becomes an actual initiating free radical. Both the α-cleavage type radical polymerization initiator and the hydrogen abstraction type radical polymerization initiator may be used alone or in combination in the present invention.

Examples of the α-cleavage type radical polymerization initiator include an acetophenone-based initiator, a benzoin-based initiator, an acylphosphine oxide-based initiator, and benzyl and methylphenyl glyoxy esters.

Examples of the acetophenone-based initiator include diethoxyacetophenone, 2-hydroxy-2-methyl-1-phenylpropan-1-one, benzyl dimethyl ketal, 1-(4-isopropylphenyl)-2-hydroxy-2-methylpropan-1-one,4-(2-hydroxyethoxy)phenyl-(2-hydroxy-2-propyl)ketone, 1-hydroxycyclohexyl-phenyl ketone, 2-methyl-2-morpholino (4-thiomethylphenyl)propan-1-one, and 2-benzyl-2-dimethylamino-1 -(4-morpholinophenyl)-butanone.

Examples of the benzoin-based initiator include benzoin, benzoin methyl ether, and benzoin isopropyl ether. Examples of the acylphosphine oxide-based initiator include 2,4,6-trimethylbenzoyldiphenylphosphine oxide and bis (2,4,6-trimethylbenzoyl)phenylphosphine oxide.

Examples of the hydrogen abstraction type radical initiator include a benzophenone-based initiator, a thioxanthone-based initiator, an aminobenzophenone-based initiator, 10-butyl-2-chloroacridone, 2-ethylanthraquinone, 9,10-phenanthrenequinone, and camphorquinone.

Examples of the benzophenone initiator include benzophenone, methyl o-benzoylbenzoate, 4-phenylbenzophenone, 4,4'-dichlorobenzophenone, hydroxybenzophenone, 4-benzoyl-4'-methyl-diphenyl sulfide, acrylated benzophenone, 3,3',4,4'-tetra (t-butylperoxycarbonyl)benzophenone, and 3,3'-dimethyl-4-methoxybenzophenone. Examples of the thioxanthone-based initiator include 2-isopropylthioxanthone, 2,4-dimethylthioxanthone, 2,4-diethylthioxanthone, and 2,4-dichlorothioxanthone.

Examples of the aminobenzophenone-based initiator include Michler's ketone and 4,4'-diethylaminobenzophenone.

### [6. Polymerization Inhibitor]

It is preferable that the ink of the present invention further contains a polymerization inhibitor. By containing the polymerization inhibitor, the adhesiveness between the plurality of compounds having curability may be reduced. In the present invention, the "polymerization inhibitor" includes all compounds which are added to inhibit a polymerization reaction during the preparation of an ink containing a polymerizable compound or during storage after the preparation.

In the present invention, various conventionally known polymerization inhibitors may be used, but as the polymerization inhibitor, it is more preferable to contain any one of an N-oxyl-based polymerization inhibitor, a phenol-based polymerization inhibitor containing an o-t-butyl group, and a polymerization inhibitor having two or more aromatic rings, from the viewpoint of exhibiting the effect.

Among these, it is more preferable to contain an N-oxyl-based polymerization inhibitor from the viewpoint of adhesiveness to a printed wiring board. In the ink of the present invention, the content of the polymerization inhibitor is preferably in the range of 0.05 to 0.5% by mass with respect to the total mass of the ink.

### [6-1. N-Oxyl-based polymerization inhibitor]

Examples of the N-oxyl-based polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2,2,6,6-tetramethyl-piperidine-N-oxyl, 4-methoxy-2,2,6,6-tetramethyl-piperidine-N-oxyl, 4-acetoxy-2,2,6,6-tetramethyl-piperidine-N-oxyl, and Irgastab ^{™}UV10 (manufactured by BASF Corporation).

### [6-2. Phenolic polymerization inhibitor]

Examples of the phenolic polymerization inhibitor include 2,6-di-tert-butylphenol, 2,4-di-tert-butylphenol, 2-tert-butyl-4,6-dimethylphenol, 2,6-di-tert-butyl-4-methylphenol, 2,4,6,-tri-tert-butylphenol, 2,6-di-t-butyl-p-cresol (butylated hydroxytoluene: BHT), 4-methoxyphenol, and 2-methoxy-4-methylphenol.

### [6-3. Quinone-based polymerization inhibitor]

Examples of the quinone-based polymerization inhibitor include hydroquinone, methoxyhydroquinone, benzoquinone, 1,4-naphthoquinone, and p-tert-butylcatechol.

### [6-4. Amine polymerization inhibitor]

Examples of the amine polymerization inhibitor include alkylated diphenylamine, N,N'-diphenyl-p-phenylenediamine, and phenothiazine.

### [6-5. Other polymerization inhibitors]

Other examples of the polymerization inhibitor include copper dithiocarbamate polymerization inhibitors such as copper dimethyldithiocarbamate, copper diethyldithiocarbamate, and copper dibutyldithiocarbamate.

Only one of these may be contained, or two or more of these may be contained. Among these, N-oxyl-based and quinone-based polymerization inhibitors are preferable, and 4-hydroxy-2,2,6,6-tetramethylpiperidine-N-oxyl (TEMPO), 2,6-di-t-butyl-p-cresol (butylated hydroxytoluene: BHT), 2,4-di-tert-butylphenol, and naphthoquinone as a polymerization inhibitor having two or more aromatic rings are preferable.

### [7. Gelling agent]

It is preferable that the ink of the present invention further contains a gelling agent. By containing a gelling agent, it is possible to temporarily fix (pin) the ink on the recording medium in a gel state, and it is possible to suppress wetting and spreading of the ink. Further, by lowering the water absorbency of the ink, it is possible to suppress hydrolysis of the compound having a structure represented by Formula (1) or a salt thereof.

The gelling agent is preferably crystallized at a temperature equal to or lower than the gelling temperature of the ink. The " gelling temperature" refers to a temperature at which the gelling agent undergoes a phase transition from sol to gel and the viscosity of the composition rapidly changes when the composition that has been converted into sol or liquid by heating is cooled. To be specific, the composition that has been converted into sol or liquid is cooled while the viscosity is measured with a viscoelasticity measuring device (for example, MCR300, manufactured by Anton Paar GmbH), and the temperature at which the viscosity rapidly increases may be defined as the gelling temperature of the composition.

In the present invention, when the gelling agent is crystallized in the ink, a structure in which a polymerizable compound (a compound involved in polymerization such as the polyfunctional compound A, an acrylate oligomer, or a monomer) is included in a three dimensional space formed by the gelling agent crystallized in a plate shape, that is, a card house structure is formed. In order to form the card house structure, it is preferable that the polymerizable compound and the gelling agent dissolved in the ink are compatible with each other.

Examples of gelling agents suitable for forming the card house structure include aliphatic ketones, aliphatic esters, petroleum waxes, vegetable waxes, animal waxes, mineral waxes, hydrogenated castor oil, modified waxes, higher fatty acids, higher alcohols, hydroxystearic acid, fatty acid amides including N-substituted fatty acid amides and special fatty acid amides, higher amines, esters of sucrose fatty acids, synthetic waxes, dibenzylidene sorbitol, dimer acids and dimer diols.

Among these, from the viewpoint of improving the pinning property, an aliphatic ketone, an aliphatic ester, a higher fatty acid, and a higher alcohol, which have a hydrocarbon group having 9 to 25 carbon atoms, are preferable. Only one kind of the gelling agent may be contained, or two or more kinds of the gelling agents may be contained.

### [7-1. Aliphatic ketone]

Examples of the aliphatic ketone include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone.

### [7-2. Aliphatic ester]

Examples of the aliphatic ester include fatty acid esters of monoalcohols such as behenyl behenate, icosyl icosanoate, and oleyl palmitate; and fatty acid esters of polyhydric alcohols such as glycerin fatty acid ester, sorbitan fatty acid ester, propylene glycol fatty acid ester, ethylene glycol fatty acid ester, and polyoxyethylene fatty acid ester.

Examples of commercially available products of the aliphatic ester include EMALEX (registered trademark) series manufactured by Nippon Emulsion Co., Ltd., and RIKEMAL (registered trademark) series and POEM (registered trademark) series manufactured by Riken Vitamin Co., Ltd.

### [7-3. Higher fatty acid]

Examples of the higher fatty acid include behenic acid, arachidic acid, stearic acid, palmitic acid, myristic acid, lauric acid, oleic acid, and erucic acid.

### [7-4. Higher alcohol]

Examples of the higher alcohol include stearyl alcohol and behenyl alcohol.

### [7-5. Suitable gelling agent]

In the present invention, the gelling agent is particularly preferably an aliphatic ketone represented by the following Formula (G1) or an aliphatic ester represented by the following Formula (G2).

Formula (G1): R₁-CO-R₂

In Formula (G1), R₁ and R₂ each independently represents an alkyl group which includes a linear portion having a carbon number in the range of 12 to 26, and may include a branch. R₁ and R₂ may be the same or different from each other.

Formula (G2): R₃-COO-R₄

In Formula (G2), R₃ and R₄ each independently represents an alkyl group which includes a linear portion having a carbon number in a range of 12 to 26 and may include a branch. R₁ and R₂ may be the same or different from each other.

In Formulas (G1) and (G2), when the number of carbon atoms of the linear or branched hydrocarbon group is equal to or greater than 12, the crystallinity of the aliphatic ketone represented by Formula (G1) or the aliphatic ester represented by Formula (G2) is further increased, and a more sufficient space is generated in the card house structure. Therefore, the polymerizable compound is easily sufficiently included in the space, and the pinning property of the ink is improved.

When the linear or branched hydrocarbon group has hydrocarbon group of a carbon number of 26 or less, the melting points of the aliphatic ketone represented by Formula (G1) and the aliphatic ester represented by Formula (G2) do not excessively increase, that is, the melting points may be set to a temperature at which the aliphatic ketone and the aliphatic ester are easily handled, and it is not necessary to excessively heat the ink when ejecting the ink.

Examples of the aliphatic ketone represented by Formula (G1) include dilignoceryl ketone (number of carbon atoms: 23, 24), dibehenyl ketone (number of carbon atoms: 21, 22), distearyl ketone (number of carbon atoms: 17, 18), dieicosyl ketone (number of carbon atoms: 19, 20), dipalmityl ketone (number of carbon atoms: 15, 16), dimyristyl ketone (number of carbon atoms: 13, 14), dilauryl ketone (number of carbon atoms: 11, 12), lauryl myristyl ketone (number of carbon atoms: 11, 14), lauryl palmityl ketone (number of carbon atoms: 11, 16), myristyl palmityl ketone (number of carbon atoms: 13, 16), myristyl stearyl ketone (number of carbon atoms: 13, 18), myristyl behenyl ketone (number of carbon atoms: 13, 22), palmityl stearyl ketone (number of carbon atoms: 15, 18), palmityl behenyl ketone (number of carbon atoms: 15, 22), and stearyl behenyl ketone (number of carbon atoms: 17, 22). The number of carbon atoms in parentheses represents the number of carbon atoms of each of two hydrocarbon groups separated by a carbonyl group.

Examples of a commercially available product of the aliphatic ketone represented by Formula (G1) include 18-Pentatriacontanon and Hentriacontan-16-on manufactured by Alfa Aeser, and Kao Wax T-1 manufactured by Kao Corporation.

Examples of the aliphatic ester represented by Formula (G2) include behenyl behenate (number of carbon atoms: 21, 22), icosyl icosanoate (number of carbon atoms: 19, 20), stearyl stearate (number of carbon atoms: 17, 18), palmityl stearate (number of carbon atoms: 16, 17), lauryl stearate (number of carbon atoms: 12, 17), cetyl palmitate (number of carbon atoms: 6, 15), stearyl palmitate (number of carbon atoms: 15, 18), myristyl myristate (number of carbon atoms: 13, 14), cetyl myristate (number of carbon atoms: 13, 16), octyldodecyl myristate (number of carbon atoms: 13, 20), stearyl oleate (number of carbon atoms: 1, 718), stearyl erucate (number of carbon atoms: 18, 21), stearyl linoleate (number of carbon atoms: 17, 18), behenyl oleate (number of carbon atoms: 18, 22) and arachidyl linoleate (number of carbon atoms: 17, 20). The number of carbon atoms in parentheses represents the number of carbon atoms of each of two hydrocarbon groups separated by an ester group.

Examples of commercially available products of the aliphatic ester represented by Formula (G2) include UNISTER (registered trademark) M-2222SL and SPERMACETI manufactured by NOF Corporation, EXEPARL (registered trademark) SS and EXEPARL (registered trademark) MY-M manufactured by Kao Corporation, EMALEX (registered trademark) CC-18 and EMALEX (registered trademark) CC-10 manufactured by Nippon Emulsion Co., Ltd., and AMREPS (registered trademark) PC manufactured by Kokyu Alcohol Kogyo Co., Ltd.

In the present invention, the content of the gelling agent is preferably in the range of 1 to 10% by mass with respect to the total mass of the ink.

### [8. Other components]

### [8-1. Surfactant]

The ink of the present invention may further contain a surfactant as necessary. Examples of the surfactant include anionic surfactants such as dialkyl sulfosuccinates, alkylnaphthalene sulfonates, and fatty acid salts, nonionic surfactants such as polyoxyethylene alkyl ethers, polyoxyethylene alkyl allyl ethers, acetylene glycols, and polyoxyethylene/polyoxypropylene block copolymers, cationic surfactants such as alkylamine salts, and quaternary ammonium salts, and silicone-based or fluorine-based surfactants.

### [8-2. Colorant]

The ink of the present invention may further contain a colorant as necessary. The colorant may be a pigment or a dye, but it is preferably a pigment from the viewpoint of good dispersibility in the constituent components of the ink and excellent weather resistance. The pigment is not particularly limited, and examples thereof include organic pigments and inorganic pigments having the following numbers described in the Color Index.

In the ink of the present invention, only one kind of colorant may be contained or two or more kinds of colorants may be contained, and the color may be adjusted to a desired color. The content of the colorant is preferably in the range of 0.1 to 20% by mass, and more preferably in the range of 0.2 to 10% by mass, with respect to the total mass of the ink.

### (Pigment)

### «Red or magenta pigment»

Examples of red or magenta pigments include pigments selected from Pigment Reds 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257; Pigment Violets 3, 19, 23, 29, 30, 37, 50, and 88; and Pigment Oranges 13, 16, 20, and 36, or mixtures thereof.

### «Blue or cyan pigment»

Examples of blue or cyan pigments include pigments selected from Pigment Blues 1, 15, 15:1, 15:2, 15:3, 15:4, 15:6, 16, 17-1, 22, 27, 28, 29, 36, and 60, or mixtures thereof.

### <<Green pigment>>

Examples of green pigments include pigments selected from Pigment Greens 7, 26, 36, and 50, or mixtures thereof.

### «Yellow pigment»

Examples of yellow pigments include pigments selected from Pigment Yellows 1, 3, 12, 13, 14, 17, 34, 35, 37, 55, 74, 81, 83, 93, 94,95, 97, 108, 109, 110, 137, 138, 139, 153, 154, 155, 157, 166, 167, 168, 180, 185, and 193, or mixtures thereof.

### «Black pigment»

Examples of black pigments include pigments selected from Pigment Blacks 7, 28, and 26, or mixtures thereof.

### «Examples of commercially available pigments»

Specific examples of commercially available products of the pigment include Black Pigment (manufactured by Mikuni-Color Ltd.) CHROMOFINE YELLOWs 2080, 5900, 5930, AF-1300, and AF-2700L; CHROMOFINE ORANGEs 3700L and 6730; CHROMOFINE SCARLET 6750; CHROMOFINE MAGENTAs 6880, 6886, 6891N, 6790, and 6887; CHROMOFINE VIOLET RE; CHROMOFINE REDs 6820 and 6830; CHROMOFINE BLUEs HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P; CHROMOFINE GREENs 2GN, 2GO, 2G-550D, 5310, 5370, and 6830; CHROMOFINE BLACK A-1103; SEIKAFAST YELLOWs 10GH, A-3, 2035, 2054, 2200, 2270, 2300, 2400(B), 2500, 2600, ZAY-260, 2700(B), and 2770; SEIKAFAST REDs 8040, C405(F), CA120, LR-116, 1531B, 8060R, 1547, ZAW-262, 1537B, GY, 4R-4016, 3820, 3891, and ZA-215; SEIKAFAST CARMINEs 6B1476T-7, 1483LT, 3840, and 3870; SEIKAFAST BORDEAUX 10B-430; SEIKALIGHT ROSE R40; SEIKALIGHT VIOLETs B800 and 7805; SEIKAFAST MAROON 460N; SEIKAFAST ORANGEs 900 and 2900; SEIKALIGHT BLUEs C718 and A612; CYANINE BLUEs 4933M, 4933GN-EP, 4940, and 4973 (manufactured by Dainichiseika Color & Chemicals Mfg. Co., Ltd. "CHROMOFINE" is a registered trademark of the company.); KET Yellows 401, 402, 403, 404, 405, 406, 416, and 424; KET Orange 501; KET Reds 301, 302, 303, 304, 305, 306, 307, 308, 309, 310, 336, 337, 338, and 346; KET Blues 101, 102, 103, 104, 105, 106, 111, 118, and 124; KET Green 201 (manufactured by DIC Corporation), Colortex Yellows 301, 314, 315, 316, P-624, 314, U10GN, U3GN, UNN, UA-414, and U263; Finecol Yellows T-13 and T-05; Pigment Yellow 1705; Colortex Orange 202, Colortex Reds 101, 103, 115, 116, D3B, P-625, 102, H-1024, 105C, UFN, UCN, UBN, U3BN, URN, UGN, UG276, U456, U457, 105C, and USN; Colortex Maroon 601; Colortex Brown B610N; Colortex Violet 600; Pigment Red 122; Colortex Blues 516, 517, 518, 519, A818, P-908, and 510; Colortex Greens 402 and 403; Colortex Blacks 702 and U905 (manufactured by Sanyo Color Works. LTD. "Colortex" and "Finecol" are registered trademarks of the company.); Lionol Yellow 1405G; Lionol Blues FG7330, FG7350, FG7400G, FG7405G, ES, and ESP-S (manufactured by Toyo Ink SC Holdings Co., Ltd. "Lionol" is a registered trademark of the company.); Toner Magenta E02; Permanent Rubin F6B; Toner Yellow HG; Permanent Yellow GG-02; Hostaperm Blue B2G (manufactured by Hoechst Industry Ltd.); Novoperm P-HG; Hostaperm Pink E; Hostaperm Blue B2G (manufactured by Clariant International Ltd. "Novoperm" and "Hostaperm" are registered trademarks of the company.); and Carbon Blacks #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

### <<Dispersion of pigment>>

The pigments may be dispersed, for example, with a ball mill, a sand mill, an Attritor, a roll mill, an agitator, a Henschel mixer, a colloid mill, an ultrasonic homogenizer, a pearl mill, a wet jet mill, or a paint shaker.

The pigment is preferably dispersed so that the volume average particle size of the pigment particles is preferably in the range of 0.08 to 0.5 µm and a maximum diameter of 0.3 to 10 µm, more preferably 0.3 to 3 µm. The dispersion of the pigment is adjusted by the selection of the pigment, the dispersant, and the dispersion medium, the dispersion conditions, and the filtration conditions.

### <<Dispersant>>

The ink of the present invention may further contain a dispersant in order to enhance the dispersibility of the pigment. Examples of the dispersant include carboxylic acid esters having a hydroxy group, salts of long chain polyamino amide and high molecular weight acid ester, salts of high molecular weight polycarboxylic acid, salts of long chain polyamino amide and polar acid ester, high molecular weight unsaturated acid esters, polymer copolymers, modified polyurethanes, modified polyacrylates, polyether ester type anionic surfactants, naphthalene sulfonic acid formalin condensate salts, aromatic sulfonic acid formalin condensate salts, polyoxyethylene alkyl phosphate esters, polyoxyethylene nonyl phenyl ethers, and stearyl amine acetates. Examples of commercial dispersants include Solsperse series such as Solsperse 22000 (manufactured by Avenica Co., Ltd.), and the PB series by Ajinomoto Fine Techno Co.

### <<Dispersing aid>>

The ink of the present invention may further contain a dispersing aid if necessary. The dispersing aid may be selected according to the pigment. The total amount of dispersant and dispersing aid is preferably in the range of 1 to 50% by mass based on the total amount of the pigment.

### <<Dispersion medium>>

The ink of the present invention may further contain a dispersion medium for dispersing the pigment, if necessary. The ink of the present invention may contain a solvent as the dispersion medium, but in order to prevent the solvent from remaining in the formed image, it is preferable to use the above-described monomer (in particular, a monomer having a low viscosity) as the dispersion medium.

### [8-3. Other additives]

The ink of the present invention may further contain a coupling agent or a solvent as necessary.

### (Coupling agent)

In the ink of the present invention, various coupling agents may be contained as necessary. The inclusion of coupling agents may improve adhesiveness to a printed wiring board. Examples of the various coupling agents include a silane coupling agent, a titanium coupling agent, and an aluminum coupling agent.

### (Solvent)

The ink of the present invention is preferably a solvent-free ink from the viewpoint of rapid curability and ejection stability, but the solvent may be added to adjust the ink viscosity.

### [Method for producing an inkjet ink composition of the present invention]

The ink of the present invention may be prepared by mixing the compound having a structure represented by Formula (1) or a salt thereof (A), the hyperbranched acrylate oligomer or polymer (B), and any other components under heating. Moreover, it is preferable to filter the obtained mixed liquid with a predetermined filter. When preparing an ink containing a pigment, it is preferable to prepare a pigment dispersion liquid containing a pigment and a polymerizable compound, and then mix the pigment dispersion liquid with other components. The pigment dispersion liquid may further contain a dispersant.

The above pigment dispersion liquid may be prepared by dispersing a pigment in a polymerizable compound using, for example, a ball mill, a sand mill, an Attritor, a roll mill, an agitator, a Henschel mixer, a colloid mill, an ultrasonic homogenizer, a pearl mill, a wet jet mill, or a paint shaker. At this time, a dispersant may be added.

### [Recorded matter of the present invention]

The recorded matter of the present invention is obtained by curing the inkjet ink composition of the present invention by an active energy ray or heat. That is, the recorded matter of the present invention is recorded on a recording medium by an inkjet recording method described below using the inkjet ink composition of the present invention. In the present invention, the cured product simply refers to a product obtained by curing the inkjet ink composition of the present invention, but is substantially the same as the recorded matter.

### [Inkjet recording method of the present invention]

The inkjet recording method of the present invention is characterized by using the inkjet ink composition of the present invention and including the steps of: discharging the inkjet ink composition from an inkjet head to land the inkjet ink composition on a recording medium; and curing the inkjet ink composition landed on the recording medium with an active energy ray or heat.

In the inkjet method, an ink is discharged from an inkjet head and is landed on a recording medium. In the inkjet method, since it is easy to apply the ink only to a necessary portion, the inkjet method is particularly suitably used for forming a solder resist pattern or printing characters.

In the step of curing the ink by irradiation with an active energy ray, the ink may be cured immediately after the step of landing the ink, or may be cured at once after the step of landing the ink is completed. Since the ink of the present invention has a relatively high viscosity at room temperature (25 °C) and does not easily wet and spread after landing on a recording medium, it is not necessary to cure the ink immediately after landing on the recording medium, and it is possible to cure the ink at once after the ink is discharged in a certain fixed or predetermined range and landed on the recording medium. By collective curing, ejection defects due to leaked light may be reduced.

In the present invention, "collective irradiation", "collective heating", and "collective curing" mean that, after a plurality of ink droplets are discharged in a certain fixed or predetermined range and landed on a recording medium, all of the plurality of ink droplets landed and present in the fixed range are cured by being irradiated with an active energy ray or heated at the same time. That is, instead of curing each droplet of ink that has landed on the recording medium, the ink is grouped in units of a certain/predetermined range (for example, all the ink required to form a predetermined image (pattern) is deposited), and ink landing, irradiation with active energy rays, or heating and curing are collectively performed.

Further, it is preferable to form a solder resist film used for a printed circuit board by the inkjet recording method of the present invention.

The inkjet recording method of the present invention is described below. The inkjet recording method of the present invention includes: (1) a step of ejecting the ink of the present invention from an inkjet head to land the ink on a recording medium; and (2) a step of curing the ink landed on the recording medium by an active energy ray or heat.

### [Step (1)]

In the step (1), the ink of the present invention is ejected from a nozzle of an inkjet head and landed on a recording medium. The recording medium is preferably a printed circuit board, although it is not particularly limited.

The ejection method from the inkjet head may be either an on-demand method or a continuous method. The inkjet head of the on-demand method may be either an electromechanical conversion method such as a single cavity type, a double cavity type, a bender type, a piston type, a share mode type, and a shared wall type, or an electrothermal conversion method such as a thermal inkjet type and a Bubble Jet (registered trademark) type (Bubble Jet is a registered trademark of Canon Inc.).

The temperature of the ink when filled in the inkjet head is preferably in the range of 40 to 100 °C, and more preferably in the range of 40 to 90 °C. In addition, the viscosity of the ink at the discharge temperature is preferably in the range of 7 to 15 mPa·s, and more preferably in the range of 8 to 13 mPa·s.

When a sol-gel phase transition type ink containing a gelling agent is used, the temperature of the ink when the ink is filled in an inkjet head is preferably in the range of (gelling temperature + 10) to (gelling temperature + 30) °C. When the temperature of the ink in the inkjet head is (gelling temperature + 10) °C or higher, the ink is not gelled in the inkjet head or on the nozzle surface, and sufficient discharge stability is obtained. In addition, when the temperature of the ink is (gelling temperature + 30) °C or lower, each component contained in the ink is prevented from being deteriorated due to temperature.

The method of heating the ink is not limited. For example, at least one of the ink supply system such as ink tanks, supply pipes, and front chamber ink tanks immediately in front of the head that make up the head carriage, piping with filters, and piezo heads may be heated by a panel heater, ribbon heater, or warm water retention.

From the viewpoint of recording speed and image quality, the amount of ink droplets at the time of ejection is preferably in the range of 2 to 20 pL.

The recording media are not particularly limited, and various metals, glass, ceramics, polyimide films, and PET films may be used. From the viewpoint of enhancing adhesiveness, it is preferable to include an inorganic substance such as a metal or glass on the surface, and examples of the metal include copper, aluminum, iron, and oxides thereof. Moreover, it can be particularly suitably used for printed circuit boards containing inorganic substances having metals and glass on the surface. As an example of the printed circuit board, a copper-clad laminate for a high-frequency circuit using glass cloth epoxy, glass polyimide, glass cloth/non-woven cloth epoxy, or glass cloth/paper epoxy may be used, and copper-clad laminates of all grades (FR-4) may be suitably used.

### [Step (2)]

In the step (2), the ink landed on the recording medium is cured by an active energy ray or heat. The ink of the present invention may be cured only by irradiation with an active energy ray or only by heating, but at least irradiation with an active energy ray is preferred, and heating further is more preferred.

Examples of the active energy ray include an electron beam, an ultraviolet ray, an α-ray, a γ-ray, and an X-ray, and an ultraviolet ray is preferable. The irradiation with an ultraviolet ray may be performed, for example, using a water-cooled LED manufactured by Phoseon Technology under the conditions of 395 nm wavelengths. By using an LED as a light source, it is possible to suppress curing failure of the ink due to melting of the ink by radiant heat of the light source.

The peak illuminance on the solder resist film surface of ultraviolet rays having a wavelength in the range of 370 to 410 nm is preferably in the range of 0.5 to 10 W/cm², more preferably in the range of 1 to 5 W/cm². Irradiation with ultraviolet rays is preferably performed so as to be within the above range. From the viewpoint of suppressing the ink from being irradiated with radiant heat, the amount of light irradiated to the solder resist film is preferably less than 1000 mJ/cm².

The irradiation with the active energy ray is preferably performed for 0.001 to 300 seconds after the landing of the ink, and is more preferably performed for 0.001 to 60 seconds in order to form a highly precise solder resist film.

From the viewpoint of suppressing polymerization inhibition due to oxygen, it is preferable to cure the ink by irradiating the landed ink with an active energy ray in an atmosphere having an oxygen concentration in the range of 0.1 to 10.0% by volume. In addition, from the viewpoint of making blooming less likely to occur, the oxygen concentration is more preferably in the range of 0.5 to 8.0% by volume, and still more preferably in the range of 0.5 to 6.0% by volume.

As a heating method, for example, it is preferable to put the material in an oven set in the range of 110 to 180 °C for 10 to 90 minutes.

### [Inkjet recording system of the present invention]

An inkjet recording system of the present invention uses the inkjet ink composition of the present invention, and includes an inkjet head that discharges the inkjet ink composition, an active energy ray irradiation unit that irradiates the inkjet ink composition landed on a recording medium with an active energy ray, and a heating unit that heats the inkjet ink composition irradiated with the active energy ray.

That is, in the system of the present invention, a recording apparatus including an inkjet head which discharges an inkjet ink composition, an active energy ray irradiation unit which irradiates the inkjet ink composition landed on a recording medium with an active energy ray, and a heating unit which heats the inkjet ink composition irradiated with the active energy ray, and the ink of the present invention are used.

The recording method of the inkjet recording apparatus is preferably a scanning method from the viewpoint of ejection stability and printing accuracy.

The inkjet recording apparatus used in the present invention includes an inkjet head that discharges the ink of the present invention to a recording medium, an active energy ray irradiation unit that irradiates the ink of the present invention landed on the recording medium with an active energy ray (for example, an ultraviolet ray) to cure the ink of the present invention, and a heating unit that heats the ink to further progress curing.

Examples of the type of the inkjet recording apparatus (printer) include a single pass printer and a serial printer. The single pass printer is provided with a line head having a length (recording medium width) corresponding to the width of the recording medium, the head is fixed without (substantially) moving, and printing is performed in one pass (single pass).

On the other hand, in the serial printer, printing is normally performed in two or more passes (multi-pass) while a head reciprocates (shuttle movement) in a direction orthogonal to a transport direction of a recording medium.

In a single pass printer, it is necessary to form a line head by arranging a plurality of inkjet heads, and a relatively large number of inkjet heads are required. However, in the case of a serial printer, it is possible to configure with only a small number of recording heads.

In the present invention, both types of printers may be used, and a serial printer may be preferably used.

### EXAMPLES

Hereinafter, the present invention will be specifically described with reference to Examples, but the present invention is not limited thereto. In the following Examples, unless otherwise specified, operations were performed at room temperature (25 °C). In addition, unless otherwise specified, "%" and "part(s)" mean "% by mass" and "part(s) by mass", respectively.

### <Preparation of yellow pigment dispersion liquid Y>

The following dispersants 1 and 2 and a dispersion medium were put into stainless steel beakers, heated and stirred for 1 hour while heating on a hotplate at 65 °C, and after cooling to room temperature, the following pigments were added thereto, and put into a glass bottle together with a 200 g of zirconia beads having a diameter of 0.5 mm, and the glass bottle was sealed.

This was subjected to a dispersion treatment with a paint shaker until a desired particle size was obtained, and then the zirconia beads were removed.
Dispersant 1: PX4701 (manufactured by BASF Corporation): 6.0 parts by mass
Dispersant 2: Solsperse 22000 (manufactured by Lubrizol Japan): 0.3 parts by mass
Dispersion medium: Dipropylene glycol diacrylate (containing 0.2% UV-10): 61.5 parts by mass
Pigment: PY185 (manufactured by BASF Corporation, Paliotol Yellow D1155): 10.2 parts by mass

### <Preparation of cyan pigment dispersion liquid C>

A cyan pigment dispersion liquid C was prepared in the same manner as in the preparation of the yellow pigment dispersion liquid Y except that the dispersant, the dispersion medium, and the pigment were changed as described below.
Dispersant: PX4701 (manufactured by BASF Corporation): 7.0 parts by mass
Dispersion medium: Dipropylene glycol diacrylate (containing 0.2% UV-10): 70 parts by mass
Pigment: PB15:4 (CHROMOFINE^{™} Blue 6332JC, manufactured by Dainichiseika Color & Chemicals Mfg. Co., Ltd.): 23 parts by mass

The acidic acrylate (used in the ink of Comparative Example), the compound having a structure represented by Formula (1) or a salt thereof (A), the hyperbranched acrylate oligomer or polymer (B), the polyfunctional (meth)acrylate having three or more (meth)acryloyl groups (C) which is not a hyperbranched acrylate oligomer or polymer, the (meth)acrylate having a ClogP value of 4.0 to 7.0 (D), the polymerization initiator, the polymerization inhibitor, the gelling agent, the hydrolysis inhibitor, and other monomers used in the preparation of the ink are as follows.

### <Acidic acrylate>

Phosphoric acid acrylate: Light Ester P-2M (manufactured by Kyoeisha Chemical Co., Ltd.)

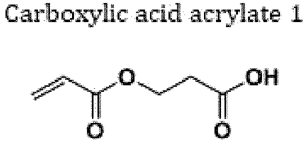

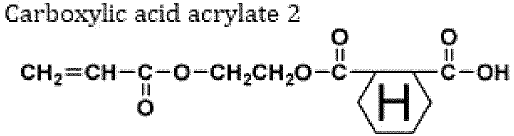

### <Compound having a structure represented by Formula (1) or a salt thereof (A)>

A-1: The Exemplified Compound A-1
A-2: The Exemplified Compound A-2
A-3: The Exemplified Compound A-3

### <Hyperbranched acrylate oligomer or polymer (B)>

B-1: CN2304 (manufactured by Sartomer Co., Ltd.) (18-functional hyperbranched polyester acrylate)
B-2: SP1106 (manufactured by Miwon Co., Inc.) (18-functional dendritic acrylate)
B-3: 6361-100 (manufactured by Eternal Material Co., Ltd.) (8-functional hyperbranched polyester acrylate)

### <Polyfunctional (math)acrylate having three or more (meth) acryloyl groups (C), which is not a hyperbranched acrylate oligomer or polymer>

C-1: M600 (manufactured by Miwon Co., Ltd.) (6-functional (meth)acrylate: Dipentaerythritol hexaacrylate)
C-2: M500 (manufactured by Miwon Co., Ltd,) (5-functional (meth)acrylate: Dipentaerythritol pentaacrylate) C-3: DPCA120 (manufactured by Nippon Kayaku Co., Ltd.) (6-functional (meth)acrylate: Caprolactam-modified dipentaerythritol hexaacrylate)

### <(Meth)acrylate (D) having a ClogP value in the range of 4.0 to 7.0>

SR834 (manufactured by Sartomer Co., Ltd.) (Tricyclodecane dimethanol dimethacrylate) (molecular weight: 304, ClogP: 4.69)
NK Ester DOD-N (manufactured by Shin-Nakamura Chemical Co., Ltd.) (1,10-Decanediol dimethacrylate) (molecular weight: 310, ClogP: 5.75)

### <Polymerization Initiator>

Type I (Norrish Type I) A: Omnirad ^{™} 907, IGM Resins (manufactured by B.V. Co., Ltd.)
Type I (Norrish Type I) B: Omnirad ^{™} 819, IGM Resins (manufactured by B.V. Co., Ltd.)
Type II (Norrish Type II): Speedcure ^{™} ITX (manufactured by Lambson Ltd.)

### <Polymerization inhibitor>

Irgastab ^{™} UV-10 (manufactured by BASF Corporation)

### <Gelling agent>

Gelling agent A: EXEPARL SS (manufactured by Kao Corporation) (aliphatic ester represented by Formula (G2))

### <Hydrolysis inhibitor>

Carbodiimide: V02B (manufactured by Nisshinbo Chemical Inc.)

### <Other monomer>

M222: Dipropylene glycol diacrylate (manufactured by Miwon Co., Ltd.)

### <Preparation of Ink>

The following components were mixed and filtered through a Teflon ^{™} 3 µm membrane filter manufactured by ADVANTEC to prepare an ink 6.

### <Compound having a structure represented by Formula (1) or a salt thereof (A)>

A-1: 10.0 parts by mass

### <<Hyperbranched acrylate oligomer or polymer (B)>>

B-1: 20.0 parts by mass

### «Polymerization initiator»

Type I A: 3.0 parts by mass
Type I B: 3.0 parts by mass
Type II: 2.0 parts by mass

### «Polymerization inhibitor»

Irgastab ^{™} UV-10: 0.1 parts by mass

### <<Pigment dispersion liquid>>

Dispersion liquid Y: 0.7 parts by mass
Dispersion liquid C: 0.5 parts by mass

### <<Other monomer>>

M222: Remainder

Each ink was prepared in the same manner as in the preparation of the ink 6, except that (A), (B), (C), (D), the acidic acrylate, the gelling agent, the hydrolysis inhibitor, and the other monomers were changed to the types and the addition amounts shown in Table I. In the preparation of the ink, the "remainder" refers to an amount excluding the addition amounts of various compounds used when the total amount is set to 100 parts by mass.

In Table I, "(A)" means a compound having a structure represented by Formula (1) or a salt thereof (A), "(B)" means a hyperbranched acrylate oligomer or polymer (B), "(C)" means a polyfunctional (meth)acrylate having three or more (meth)acryloyl groups (C), which is not a hyperbranched acrylate oligomer or polymer, and "(D)" means a (meth)acrylate having a ClogP value in the range of 4.0 to 7.0 (D).

### <Formation of cured ink film by inkjet Method>

Each of the prepared inks was loaded into an inkjet recording apparatus having an inkjet recording head equipped with a piezo-type inkjet nozzle. Using this apparatus, a solder resist pattern was formed on a copper-clad laminate for a printed wiring board (FR-4, 1.6 mm thick, 150 mm × 95 mm in size) to obtain a cured film (or cured product).

The ink supply system includes an ink tank, an ink flow path, a sub-ink tank immediately before an inkjet recording head, a pipe with a metallic filter, and a piezo head. The ink was heated from the ink tank to the head portion at 80 °C. A heater was also built in the piezo head, and the ink temperature in the recording head was heated to 80 °C. In the piezo head, heads having nozzle diameters of 22 µm and nozzle resolutions of 360 dpi were arranged in a staggered manner to form nozzle rows of 720 dpi.

Using this inkjet apparatus, a voltage was applied so that the amount of liquid droplets became a dot of 6.0 pL, and a solid pattern of 20 mm × 50 mm was printed on the substrate so that each of the thicknesses became 20 µm. Then, an LED lamp (395 nm, 8 W/cm², water cooled unit) manufactured by Phoseon Technology was used to irradiate at 1 W/cm² and 500 mJ/cm² to cure the coating film. After that, it was placed in an oven set at 150 °C for 60 minutes for curing to obtain a cured film.

[Evaluation]

### <Viscosity variation>

With respect to the prepared ink, the viscosity at 80 °C of each ink was measured by Physica MCR301 (manufactured by Anton Paar GmbH) at a shear rate of 1000 (1/s). The measurement was performed immediately after the liquid preparation and after storage at 85 °C for 4 days, and evaluation was performed according to the following criteria.

### (Criteria)

Circle: Viscosity variation is less than 0.7 mPa·s.
Triangle: Viscosity variation is 0.7 mPa·s or more and less than 1.0 mPa·s.
Cross mark: Viscosity variation is 1.0 mPa·s or more.

### <Average particle size variation>

With respect to the prepared ink, the average particle size (Z-average) of each ink was measured by a dynamic light scattering method using Data Sizer Nano ZSP (manufactured by Malvern Instruments Ltd.). The ink was diluted 200 times and then measured at a measurement temperature of 25 °C. The measurement was performed immediately after liquid preparation and after storage at 85 °C for 4 days, and evaluation was performed according to the following criteria.

### (Criteria)

Circle: Particle size variation is less than 15 nm
Triangle: Particle size variation is 15 nm or more and less than 30 nm
Cross mark: Particle size variation is 30 nm or more

<Adhesiveness>

With respect to the prepared print sample of the solid pattern, the cured film was cut in a grid pattern in accordance with the cross-cut method of JIS standard K5600, and an adhesive tape was attached and peeled off to observe the peeled state of the cured film.

### (Criteria)

Double circle: Adhesion residual rate is 100%.
Circle: Adhesion residual rate is 80% or more and less than 100%.
Triangle: Adhesion residual rate is 60% or more and less than 80%.
Cross mark: Adhesion residual rate is less than 60%.

### <Pencil hardness>

The surface pencil hardness of the prepared solid pattern print sample was measured in accordance with the method described in JIS K 5400.

### <Precipitation>

The prepared ink was placed in a transparent heat-resistant tube in approximately 10 g, stored at 85 °C, then stored for 1 day, 4 days, 1 week, and 2 weeks, and the presence or absence of an increase in precipitation was visually observed before and after the storage.

### (Criteria)

Double circle: No increase in precipitates is observed even after 2 weeks.
Circle: No increase in precipitates is observed after 1 week, and an increase in precipitates is observed after 2 weeks.
Triangle: No increase in precipitates is observed after 4 days, and an increase in precipitates is observed after 1 week.
Cross mark: An increase in precipitates is observed after 1 day.

### <Acid resistance>

The prepared solid pattern was immersed in a 10% HCl aqueous solution at 25 °C for 30 minutes, then washed with pure water, and then the moisture was wiped off, and the same evaluation as that of the adhesiveness was performed.

### (Criteria)

Double circle: Adhesion residual rate is 100%.
Circle: Adhesion residual rate is 80% or more and less than 100%.
Triangle: Adhesion residual rate is 60% or more and less than 80%.
Cross mark: Adhesion residual rate is less than 60%.

### <Alkali resistance>

The prepared solid pattern was immersed in a 10% NaOH aqueous solution at 25 °C for 30 minutes, then washed with pure water, and then the moisture was wiped off, and the same evaluation as that of the adhesiveness was performed.

### (Criteria)

Double circle: Adhesion residual rate is 100%.
Circle: Adhesion residual rate is 80% or more and less than 100%.
Triangle: Adhesion residual rate is 60% or more and less than 80%.
Cross mark: Adhesion residual rate is less than 60%.

**Table I**

| Ink No. | | 1 | 2 | 3 | 4 | 5 | 6 | 7 | 8 | 9 | 10 | 11 | 12 |
|---|---|---|---|---|---|---|---|---|---|---|---|---|---|
| Compound | | Added amount (part by mass) | | | | | | | | | | | |
| Acidic acrylate | Phosphoric acid acrylate | 10.0 | - | - | - | - | - | - | - | - | - | - | - |
| | Carboxylic acid acrylate 1 | - | 10.0 | - | - | - | - | - | - | - | - | - | - |
| | Carboxylic acid acrylate 2 | - | - | 10.0 | - | - | - | - | - | - | - | - | - |
| (A) | A-1 | - | - | - | 10.0 | | 10.0 | - | - | 10.0 | 10.0 | 10.0 | 10.0 |
| | A-2 | - | - | - | - | 10.0 | - | 10.0 | - | - | - | - | - |
| | A-3 | - | - | - | - | - | - | - | 10.0 | - | - | - | - |
| (B) | B-1 | - | - | - | - | - | 20.0 | - | - | 20.0 | 20.0 | 20.0 | 20.0 |
| | B-2 | - | - | - | - | - | - | 20.0 | - | - | - | - | - |
| | B-3 | - | - | - | - | - | - | - | 20.0 | - | - | - | - |
| (C) | C-1 | - | - | - | - | - | - | 10.0 | < | - | - | - | - |
| | C-2 | - | - | - | - | - | - | - | 10.0 | < | < | - | - |
| | C-3 | - | - | - | - | - | - | - | - | 10.0 | < | - | - |
| (D) | SR834 | - | - | - | - | - | - | - | - | - | 10.0 | - | - |
| | NK Ester DOD-N | - | - | - | - | - | - | - | - | - | - | - | - |
| Gelling agent | Gelling agent A | - | - | - | - | - | - | - | - | - | - | - | 1. 0 |
| Hydrolysis inhibitor | V-02B (Carbodiimide) | - | - | - | - | 1.0 | - | - | - | - | - | - | - |
| Other monomer | M222 | *1 | *1 | *1 | *1 | *1 | *1 | *1 | *1 | *1 | *1 | *1 | *1 |
| Evaluation | Viscosity variation | × | ○ | ○ | ○ | × | ○ | ○ | ○ | ○ | ○ | ○ | ○ |
| | Average particle size variation | × | ○ | ○ | ○ | ○ | ○ | ○ | ○ | ○ | ○ | ○ | ○ |
| | Adhesiveness | Ⓞ | × | × | Ⓞ | Ⓞ | Ⓞ | Ⓞ | Ⓞ | Ⓞ | Ⓞ | Ⓞ | Ⓞ |
| | Pencil hardness | 4H | 3H | 3H | 5H | 5H | 5H | 6H | 6H | 6H | 5H | 5H | 5H |
| | Precipitation | ○ | ○ | ○ | × | ○ | ○ | ○ | ○ | Ⓞ | Ⓞ | Ⓞ | Ⓞ |
| | Acid resistance | ○ | × | × | ○ | ○ | ○ | ○ | ○ | Ⓞ | ○ | ○ | ○ |
| | Alkali resistance | ○ | × | × | ○ | ○ | ○ | ○ | ○ | Ⓞ | ○ | ○ | ○ |
| | | *2-1 | *2-2 | *2-3 | *2-4 | *2-5 | *3-1 | *3-2 | *3-3 | *3-4 | *3-5 | *3-6 | *3-7 |

| | | | | | | | | | | | | | |
|---|---|---|---|---|---|---|---|---|---|---|---|---|---|
| *1: Remainder *2: Comparative Example *3: Example | | | | | | | | | | | | | |

As shown in the above results, it is recognized that the ink of the present invention has high adhesiveness, can obtain sufficient hardness, can suppress an increase in viscosity during long-term storage or retention, and can suppress a change in particle diameter and generation of a precipitate, as compared with the inks of Comparative Examples. In particular, it was found that the ink 9 using caprolactam-modified dipentaacrylate was excellent in acid resistance and alkali resistance.

## Claims

1. An inkjet ink composition that is curable with an active energy ray or heat, containing: a compound having a structure represented by Formula (1) or salt thereof (A); and a hyperbranched acrylate oligomer or polymer (B), 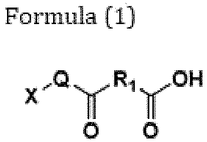 in Formula (1), X represents a substituent having at an end thereof at least one selected from an acryloyl group, a methacryloyl group, an allyl group, a vinyl group and derivatives thereof, Q represents an oxygen atom or NR₄, and R₄ represents a hydrogen atom, a substituted or unsubstituted alkyl group, or a substituted or unsubstituted aryl group, and R₁ represents an unsubstituted alkylene group having 1 to 6 carbon atoms.

2. The inkjet ink composition according to claim 1, wherein in Formula (1), X represents an acryloyl group or a methacryloyl group.

3. The inkjet ink composition according to claim 1 or 2, wherein in Formula (1), Q represents an oxygen atom.

4. The inkjet ink composition according to any one of claims 1 to 3, wherein in Formula (1), R₁ represents an unsubstituted alkylene group having 1 or 2 carbon atoms.

5. The inkjet ink composition according to any one of claims 1 to 4, further containing a polyfunctional (meth)acrylate (C) having three or more (meth)acryloyl groups other than the hyperbranched acrylate oligomer or polymer (B).

6. The inkjet ink composition according to claim 5, wherein the polyfunctional (meth)acrylate (C) having three or more (meth)acryloyl groups other than the hyperbranched acrylate oligomer or polymer (B) is a caprolactam modified dipentaacrylate.

7. The inkjet ink composition according to any one of claims 1 to 6, further containing a (meth)acrylate compound (D) having a ClogP value in the range of 4.0 to 7.0.

8. The inkjet ink composition according to any one of claims 1 to 7, further containing a gelling agent (E).

9. The inkjet ink composition according to any one of claims 1 to 8, wherein the inkjet ink composition is used as an inkjet ink for forming a solder resist pattern used for a printed circuit board.

10. A recorded matter obtained by curing the inkjet ink composition according to any one of claims 1 to 9 with an active energy ray or heat.

11. An inkjet recording method using the inkjet ink composition according to any one of claims 1 to 9, comprising the steps of:
discharging the inkjet ink composition from an inkjet head to land the inkjet ink composition on a recording medium; and
curing the inkjet ink composition landed on the recording medium by an active energy ray or heat.

12. An inkjet recording system using the inkjet ink composition according to any one of claims 1 to 9, provided with: an inkjet head that discharges the inkjet ink composition; an active energy ray irradiation unit that irradiates the inkjet ink composition that has landed on a recording medium; and a heating unit that heats the inkjet ink composition that has been irradiated with the active energy ray.

## Patentansprüche

1. Tintenstrahltintenzusammensetzung, die mit einem aktiven Energiestrahl oder Wärme härtbar ist, enthaltend: eine Verbindung mit einer durch Formel (1) dargestellten Struktur oder ein Salz davon (A) und ein hyperverzweigtes Acrylatoligomer oder -polymer (B), 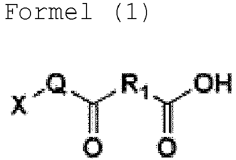 in Formel (1) stellt X einen Substituenten dar, der an einem Ende davon mindestens eine, ausgewählt aus einer Acryloylgruppe, einer Methacryloylgruppe, einer Allylgruppe, einer Vinylgruppe und Derivaten davon, aufweist, Q stellt ein Sauerstoffatom oder NR₄ dar und R₄ stellt ein Wasserstoffatom, eine substituierte oder unsubstituierte Alkylgruppe oder eine substituierte oder unsubstituierte Arylgruppe dar und R₁ stellt eine unsubstituierte Alkylengruppe mit 1 bis 6 Kohlenstoffatomen dar.

2. Tintenstrahltintenzusammensetzung gemäß Anspruch 1, wobei in Formel (1) X eine Acryloylgruppe oder eine Methacryloylgruppe darstellt.

3. Tintenstrahltintenzusammensetzung gemäß Anspruch 1 oder 2, wobei in Formel (1) Q ein Sauerstoffatom darstellt.

4. Tintenstrahltintenzusammensetzung gemäß irgendeinem der Ansprüche 1 bis 3, wobei in Formel (1) R₁ eine unsubstituierte Alkylengruppe mit 1 oder 2 Kohlenstoffatomen darstellt.

5. Tintenstrahltintenzusammensetzung gemäß einem der Ansprüche 1 bis 4, ferner enthaltend ein anderes polyfunktionelles (Meth)acrylat (C) mit drei oder mehr (Meth)acryloylgruppen als das hyperverzweigte Acrylatligomer oder -polymer (B).

6. Tintenstrahltintenzusammensetzung gemäß Anspruch 5, wobei das andere polyfunktionelle (Meth)acrylat (C) mit drei oder mehr (Meth)acryloylgruppen als das hyperverzweigte Acrylatoligomer oder -polymer (B) ein Caprolactam-modifiziertes Dipentaacrylat ist.

7. Tintenstrahltintenzusammensetzung gemäß einem der Ansprüche 1 bis 6, ferner enthaltend eine (Meth)acrylatverbindung (D) mit einem ClogP-Wert in einem Bereich von 4,0 bis 7,0.

8. Tintenstrahltintenzusammensetzung gemäß einem der Ansprüche 1 bis 7, ferner enthaltend ein Geliermittel (E) .

9. Tintenstrahltintenzusammensetzung gemäß einem der Ansprüche 1 bis 8, wobei die Tintenstrahltintenzusammensetzung als eine Tintenstrahltinte zur Bildung eines Lötstopplackmusters verwendet werden, das für eine Leiterplatte verwendet wird.

10. Aufgezeichnetes Material, das durch Härten der Tintenstrahltintenzusammensetzung gemäß einem der Ansprüche 1 bis 9 mit einem aktiven Energiestrahl oder Wärme erhalten wird.

11. Tintenstrahlaufzeichnungsverfahren unter Verwendung der Tintenstrahltintenzusammensetzung gemäß einem der Ansprüche 1 bis 9, umfassend die Schritte:
Ausstoßen der Tintenstrahltintenzusammensetzung aus einem Tintenstrahlkopf, um die Tintenstrahltintenzusammensetzung auf ein Aufzeichnungsmedium zu bringen, und
Härten der auf dem Aufzeichnungsmedium aufgebrachten Tintenstrahltintenzusammensetzung durch einen aktiven Energiestrahl oder Wärme.

12. Tintenstrahlaufzeichnungssystem unter Verwendung einer Tintenstrahltintenzusammensetzung gemäß einem der Ansprüche 1 bis 9, ausgestattet mit: einem Tintenstrahlkopf, der die Tintenstrahltintenzusammensetzung ausstößt, einer Bestrahlungseinheit für einen aktiven Energiestrahl, der die Tintenstrahltintenzusammensetzung, die auf einem Aufzeichnungsmedium aufgebracht wurde, bestrahlt und eine Erwärmungseinheit, die die Tintenstrahltintenzusammensetzung, die mit dem aktiven Energiestrahl bestrahlt wurde, erwärmt.

## Revendications

1. Composition d'encre pour jet d'encre qui est durcissable avec un rayon d'énergie active ou de la chaleur, contenant : un composé présentant une structure représentée par la Formule (1) ou un sel de celui-ci (A) ; et un oligomère ou polymère d'acrylate hyperramifié (B), 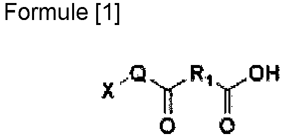 dans la Formule (1), X représente un substituant présentant, au niveau d'une extrémité de celui-ci, au moins un sélectionné parmi un groupe acryloyle, un groupe méthacryloyle, un groupe allyle, un groupe vinyle et des dérivés de ceux-ci, Q représente un atome d'oxygène ou NR₄, et R₄ représente un atome d'hydrogène, un groupe alkyle substitué ou non substitué, ou un groupe aryle substitué ou non substitué, et R₁ représente un groupe alkylène non substitué présentant 1 à 6 atomes de carbone.

2. Composition d'encre pour jet d'encre selon la revendication 1, dans laquelle dans la Formula (1), X représente un groupe acryloyle ou un groupe méthacryloyle.

3. Composition d'encre pour jet d'encre selon la revendication 1 ou la revendication 2, dans laquelle dans la Formula (1), Q représente un atome d'oxygène.

4. Composition d'encre pour jet d'encre selon l'une quelconque des revendications 1 à 3, dans laquelle dans la Formula (1), R₁ représente un groupe alkylène non substitué présentant 1 ou 2 atomes de carbone.

5. Composition d'encre pour jet d'encre selon l'une quelconque des revendications 1 à 4, contenant en outre un (méth)acrylate polyfonctionnel (C) présentant trois groupes (méth)acryloyle ou plus autres que l'oligomère ou polymère d'acrylate hyperramifié (B).

6. Composition d'encre pour jet d'encre selon la revendication 5, dans laquelle le (méth)acrylate polyfonctionnel (C) présentant trois groupes (méth)acryloyle ou plus autres que l'oligomère ou polymère d'acrylate hyperramifié (B) est un dipentaacrylate modifié par caprolactame.

7. Composition d'encre pour jet d'encre selon l'une quelconque des revendications 1 à 6, contenant en outre un composé de (méth)acrylate (D) présentant une valeur ClogP dans la plage de 4,0 à 7,0.

8. Composition d'encre pour jet d'encre selon l'une quelconque des revendications 1 à 7, contenant en outre un agent gélifiant E).

9. Composition d'encre pour jet d'encre selon l'une quelconque des revendications 1 à 8, dans laquelle la composition d'encre pour jet d'encre est utilisée comme encre pour jet d'encre pour former un motif de réserve de soudure utilisé pour une carte de circuit imprimé.

10. Matière enregistrée obtenue en faisant durcir la composition d'encre pour jet d'encre selon l'une quelconque des revendications 1 à 9 avec un rayon d'énergie active ou de la chaleur.

11. Procédé d'enregistrement à jet d'encre utilisant la composition d'encre pour jet d'encre selon l'une quelconque des revendications 1 à 9, comprenant les étapes consistant à :
rejeter la composition d'encre pour jet d'encre depuis une tête à jet d'encre pour déposer la composition d'encre pour jet d'encre sur un support d'enregistrement ; et
faire durcir la composition d'encre pour jet d'encre déposée sur le support d'enregistrement par un rayon d'énergie active ou de la chaleur.

12. Système d'enregistrement à jet d'encre utilisant la composition d'encre pour jet d'encre selon l'une quelconque des revendications 1 à 9, muni : d'une tête à jet d'encre qui rejette la composition d'encre pour jet d'encre ; d'une unité d'irradiation à rayon d'énergie active qui irradie la composition d'encre pour jet d'encre qui a été déposée sur un support d'enregistrement ; et d'une unité de chauffage qui chauffe la composition d'encre pour jet d'encre qui a été irradiée avec le rayon d'énergie active.
